# EUROPEAN PATENT APPLICATION

(11) **EP 4 783 109 A1**
(43) Date of publication of application: **29.07.2026**
(21) Application number: 23953109.8
(22) Date of filing: 22.09.2023
(51) Int. Cl.: G06T 7/00

(54) **INFORMATION PROCESSING DEVICE, INFORMATION PROCESSING METHOD, AND RECORDING MEDIUM**

(71) Applicant: NEC Corporation, 108-8001 Tokyo (JP)
(72) Inventor: TOIZUMI, Takahiro, Tokyo 108-8001 (JP); SHOJI, Yuho, Tokyo 108-8001 (JP); SASAKI, Masato, Tokyo 108-8001 (JP); SUGA, Akito, Tokyo 108-8001 (JP)
(74) Representative: Betten & Resch
(86) International application number: PCT/JP2023/034512
(87) International publication number: WO 2025/062631

(57) **Abstract**

An information processing apparatus includes: an image capture unit that captures an eye image containing an iris region of a target; an identification unit that identifies an unimaged region indicating a region of an iris region of the target that cannot be captured by the image capture unit due to an occluding object; and an output unit that outputs the eye image including information about the unimaged region. Such an information processing apparatus makes it possible for the target or others to appropriately grasp information about an unimaged part of the target's iris region.

## Description

### Technical Field

The present disclosure relates to technical fields of an information processing apparatus, an information processing method, and a recording medium.

### Background Art

In an apparatus that capture an iris image containing an iris region of a target, various types of processing may be performed to increase the proportion of the iris region in the image. For example, Patent Literature 1 discloses that a guidance instruction is given to the target, based on a degree of the target's eyelid opening.

### Citation List

### Patent Literature

Patent Literature 1: International Publication No. WO2021/245823

### Summary

### Technical Problem

It is an example object of the present disclosure to provide an information processing apparatus, an information processing method, and a recording medium that aim to improve the technique/technology related to Citation List described above.

### Solution to Problem

An information processing apparatus according to a first example aspect of the present disclosure includes: an image capture unit that captures an eye image containing an iris region of a target; an identification unit that identifies an unimaged region indicating a region of an iris region of the target that cannot be captured by the image capture unit due to an occluding object; and an output unit that outputs the eye image including information about the unimaged region.

An information processing method according to an example aspect of the present disclosure is an information processing method that is executed by at least one computer, the information processing method including: capturing an eye image containing an iris region of a target; identifying an unimaged region indicating a region of an iris region of the target that cannot be captured due to an occluding object; and outputting the eye image including information about the unimaged region.

A recording medium according to an example aspect of the present disclosure is a recording medium on which a computer program that allows at least one computer to execute an information processing method is recorded, the information processing method including: capturing an eye image containing an iris region of a target; identifying an unimaged region indicating a region of an iris region of the target that cannot be captured due to an occluding object; and outputting the eye image including information about the unimaged region.

### Brief Description of Drawings

[FIG. 1] FIG. 1 is a block diagram illustrating a hardware configuration of a first information processing apparatus.
[FIG. 2] FIG. 2 is a block diagram illustrating a functional configuration of the first information processing apparatus.
[FIG. 3] FIG. 3 is a flowchart illustrating an operation flow in the first information processing apparatus.
[FIG. 4] FIG. 4 is a block diagram illustrating a functional configuration of a second information processing apparatus.
[FIG. 5] FIG. 5 is a flowchart illustrating an operation flow in the second information processing apparatus.
[FIG. 6] FIG. 6 is a block diagram illustrating a functional configuration of a third information processing apparatus.
[FIG. 7] FIG. 7 is a flowchart illustrating an operation flow in the third information processing apparatus.
[FIG. 8] FIG. 8 is a flowchart illustrating an operation flow in a fourth information processing apparatus.
[FIG. 9] FIG. 9 is a block diagram illustrating a functional configuration of a fifth information processing apparatus.
[FIG. 10] FIG. 10 is a flowchart illustrating an operation flow in the fifth information processing apparatus.
[FIG. 11] FIG. 11 is a block diagram illustrating a functional configuration of a sixth information processing apparatus.
[FIG. 12] FIG. 12 is a flowchart illustrating an operation flow in the sixth information processing apparatus.
[FIG. 13] FIG. 13(a) to FIG. 13(c) are plan views illustrating display examples of guidance information in a seventh information processing apparatus.
[FIG. 14] FIG. 14 is a block diagram illustrating a functional configuration of an eighth information processing apparatus.
[FIG. 15] FIG. 15(a) and FIG. 15(b) are plan views (Part 1) illustrating display examples of the guidance information in a ninth information processing apparatus.
[FIG. 16] FIG. 16 is a plan view (Part 2) illustrating a display example of the guidance information in the ninth information processing apparatus.
[FIG. 17] FIG. 17 is a flowchart illustrating an operation flow in a tenth information processing apparatus.
[FIG. 18] FIG. 18(a) and FIG. 18(b) are plan views illustrating display examples of first guidance in an eleventh information processing apparatus.
[FIG. 19] FIG. 19 is a plan view illustrating a display example of second guidance in the eleventh information processing apparatus.
[FIG. 20] FIG. 20 is a flowchart illustrating tan operation flow in a twelfth information processing apparatus.
[FIG. 21] FIG. 21(a) and FIG. 21(b) are plan views illustrating display examples of the guidance information in a thirteenth information processing apparatus.

### Description of Example embodiments

Hereinafter, an information processing apparatus, an information processing method, and a recording medium according to example embodiments will be described with reference to the drawings.

### <First Example Embodiment>

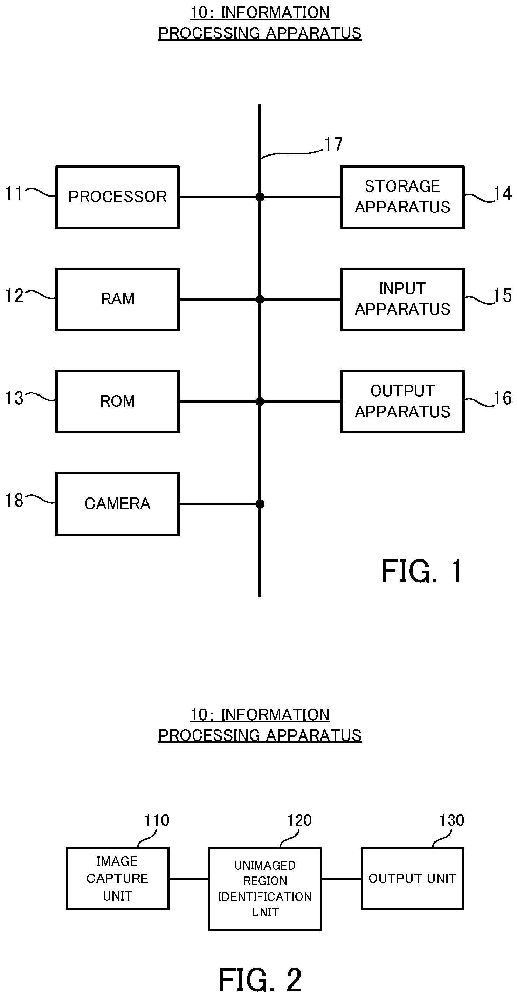

A first example embodiment will be described with reference to FIG. 1 to FIG. 3.

### (Hardware Configuration)

First, with reference to FIG. 1, a hardware configuration of a first information processing apparatus will be described. FIG. 1 is a block diagram illustrating the hardware configuration of the first information processing apparatus.

As illustrated in FIG. 1, a first information processing apparatus 10 includes a processor 11, a RAM (Random Access Memory) 12, a ROM (Read-Only Memory) 13, and a storage apparatus 14. The information processing apparatus 10 may further include an input apparatus 15 and an output apparatus 16. The processor 11, the RAM 12, the ROM 13, the storage apparatus 14, the input apparatus 15, and the output apparatus 16 are connected via a data bus 17. The data bus 17 may be an interface other than a data bus (e.g., a LAN, a USB, etc.).

The processor 11 reads a computer program. For example, the processor 11 is configured to read a computer program stored in at least one of the RAM 12, the ROM 13, and the storage apparatus 14. Alternatively, the processor 11 may read a computer program stored on a computer-readable recording medium, by using a not-illustrated recording medium reading apparatus. The processor 11 may also acquire (i.e., read) a computer program from a not-illustrated apparatus disposed outside the information processing apparatus 10 via a network interface. The processor 11 controls the RAM 12, the storage apparatus 14, the input apparatus 15, and the output apparatus 16 by executing the read computer program. Especially in the present example embodiment, when the processor 11 executes the read computer program, a function block for performing processing related to image capture of an eye image containing an iris region of a target is realized in the processor 11. That is, the processor 11 may function as a controller that performs each control in the information processing apparatus 10.

The processor 11 may be configured, for example, as a CPU (Central Processing Unit), a GPU (Graphics Processing Unit), a FPGA (field-programmable gate array), a DSP (Digital Signal Processor), an ASIC (Application Specific Integrated Circuit), or a quantum processor. The processor 11 may be configured by using one of them, or a plurality of them in parallel.

The RAM 12 temporarily stores the computer program to be executed by the processor 11. The RAM 12 temporarily stores data that are temporarily used by the processor 11 when the processor 11 is executing the computer program. The RAM 12 may be, for example, a D-RAM (Dynamic Random Access Memory) or a SRAM (Static Random Access Memory). In addition, another type of volatile memory may be used in place of the RAM 12.

The ROM 13 stores the computer program to be executed by the processor 11. The ROM 13 may also store other fixed data. The ROM 13 may be, for example, a P-ROM (Programmable Read Only Memory) or an EPROM (Erasable Read Only Memory). In addition, another type of nonvolatile memory may be used in place of the ROM 13.

The storage apparatus 14 stores data that are stored by the information processing apparatus 10 for a long time. The storage apparatus 14 may operate as a transitory storage apparatus of the processor 11. The storage apparatus may store the computer program to be executed by the processor 11. The storage apparatus 14 may include, for example, at least one of a hard disk apparatus, a magneto-optical disk apparatus, a SSD (Solid State Drive), and a disk array apparatus.

The input apparatus 15 is an apparatus that receives an input instruction from a user of the information processing apparatus 10. The input apparatus 15 may include, for example, at least one of a keyboard, a mouse, and a touch panel. The input apparatus 15 may be configured as a mobile terminal such as a smartphone and a tablet. The input apparatus 15 may be an apparatus that allows audio input/voice input, including a microphone, for example. The input apparatus 15 may be used, for example, solely for maintenance purposes. In such a case, the input apparatus 15 may be omitted as appropriate from the components used when the information processing apparatus 10 is operated.

The output apparatus 16 is an apparatus that outputs information about the information processing apparatus 10 to the outside. For example, the output apparatus 16 may be a display apparatus (e.g., a display) that is configured to display the information about the information processing apparatus 10. The output apparatus 16 may also be a speaker or the like that is configured to audio-output the information about the information processing apparatus 10. The output apparatus 16 may also be configured as a mobile terminal such as a smartphone and a tablet.

A camera 18 is a sensor device that captures images of a target. Note that the target here is not limited to humans, and may include, for example, animals such as dogs and cats, robots or the like. The camera 18 may be fixed at a position at which images of the target can be captured. Alternatively, the camera 18 may be mounted on a terminal or the like (e.g., a personal computer, a tablet, a smartphone) used by the target. The camera according to the present example embodiment is especially configured to capture images of the target's iris region. The type of the camera 18 is not particularly limited, but may be, for example, a near-infrared camera. A plurality of cameras 18 may be also provided. In this case, the plurality of cameras 18 may be of the same type or of different types.

Note that FIG. 1 illustrates an example of the information processing apparatus 10 including a plurality of apparatuses, but all or a part of these functions may be realized in a single apparatus. Such an information processing apparatus may include, for example, only the processor 11, the RAM 12, and the ROM 13 described above. The other components (i.e., the storage apparatus 14, the input apparatus 15, the output apparatus 16, etc.) may be provided in an external apparatus connected to the information processing apparatus 10. In addition, the information processing apparatus 10 may realize a part of an arithmetic/computational function by using an external apparatus (e.g., an external server or cloud, etc.).

### (Functional Configuration)

Next, with reference to FIG. 2, a functional configuration of the first information processing apparatus 10 will be described. FIG. 2 is a block diagram illustrating the functional configuration of the first information processing apparatus.

In FIG. 2, the first information processing apparatus 10 is configured as an apparatus that captures an eye image containing an iris region of a target and outputs information about the eye image. The first information processing apparatus 10 includes, as components for realizing its functions, an image capture unit 110, an unimaged region identification unit 120, and an output unit 130.

The image capture unit 110 is configured to capture an eye image containing the target's iris region. The eye image may include not only the target's iris, but also the eye, an area around the eye, and other parts (e.g., eyebrows, nose, etc.). The image capture unit 110 includes the aforementioned camera 18 (see FIG. 1). For example, the image capture unit 110 may be configured to capture images of the target's iris region in an imaging range using the camera 18 and to acquire the captured eye image. The image capture unit 110 may be configured to capture the eye image upon detecting the target. For example, the image capture unit 110 may capture the eye image when a moving target reaches a predetermined position. Alternatively, the image capture unit 110 may be configured to capture the eye image when the target performs a predetermined operation. For example, the image capture unit 110 may capture the eye image in timing when the target presses an image capture button. The eye image acquired by the image capture unit 110 is configured to be outputted to the unimaged region identification unit 120.

The unimaged region identification unit 120 is configured to identify an unimaged region in the eye image captured by the image capture unit 110. The unimaged region indicates a region of the target's iris region that cannot be captured/imaged by the image capture unit 110 due to an occluding object. Here, the "occluding object" refers to a factor that hinders the image capture of the iris region. An example of the occluding object is the target's eyelid. When the target narrows their eyes, the eyelid obscures at least a part of the iris region. As the part of the eyelid overlapping the iris region increases, the unimaged region becomes larger. Other examples of the occluding object include the target's eyelashes and hair, as well as worn items such as glasses, contact lenses, masks, and hats. The unimaged region identification unit 120 may, for example, identify the unimaged region by extracting the iris region from the eye image and use iris circle information, which is separately acquired, to identify the unimaged region. The iris circle information may be extracted, for example, using a regression model based on a neural network that is trained/learned to extract circle information from images. This regression model may be trained/learned to directly extract a circle or to extract points on an iris circle. In a case where the regression model is trained/learned to extract points on the iris circle, the circle may be detected by fitting that uses points detected after regression or similar methods. Alternatively, the iris circle may be detected by circle detection using a previously acquired iris region (i.e., a previously imaged/captured iris region). In this case, the circle may be detected, for example, using a Hough transform. Information about the unimaged region identified by the unimaged region identification unit 120 is configured to be outputted to the output unit 130.

The output unit 130 outputs the eye image captured by the image capture unit 110, including the information about the unimaged region identified by the unimaged region identification unit 120. The output unit 130 outputs the eye image including the information about the unimaged region, to a display, which is an example of the output apparatus 14 (see FIG. 1) described above. In this case, the display shows the eye image and the information about the unimaged region. The information about the unimaged region may, for example, be superimposed and displayed on the eye image. More specifically, it may be displayed as information indicating which part of the eye image is the unimaged region. Specific display examples of the eye image and the unimaged region will be described in other example embodiments later.

### (Operation Flow)

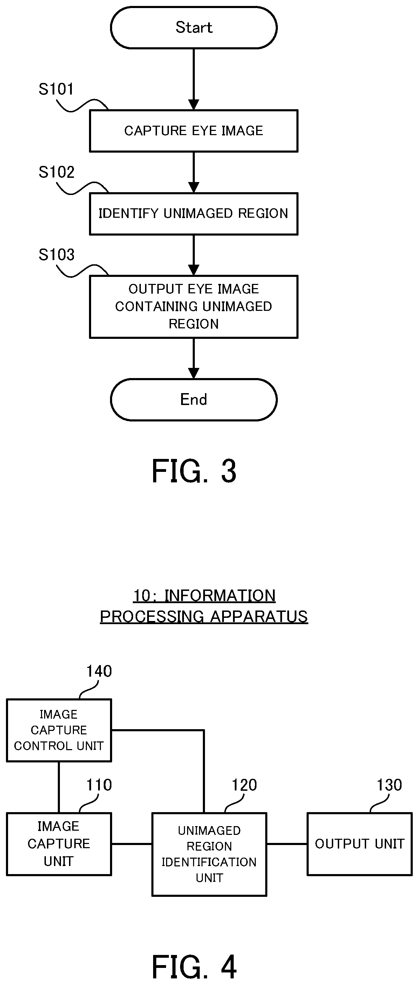

Next, with reference to FIG. 3, an operation flow in the first information processing apparatus 10 will be described. FIG. 3 is a flowchart illustrating the operation flow in the first information processing apparatus.

As illustrated in FIG. 3, when the operation of the first information processing apparatus 10 is started, the image capture unit 110 first captures the eye image containing the target's iris region (Step S101). Subsequently, the unimaged region identification unit 120 identifies the unimaged region in the eye image captured by the image capture unit 110 (Step S102).

Then, the output unit 130 outputs the eye image captured by the image capture unit 110, including the information about the unimaged region identified by the unimaged region identification unit 120 (Step S103). The eye image and the information about the unimaged region may, for example, be displayed to the target. Alternatively, the eye image and the information about the unimaged region may be displayed to an administrator of the information processing apparatus 10, or the like. Alternatively, the eye image and the information about the unimaged region may be outputted to an apparatus other than the information processing apparatus 10 (i.e., an external apparatus).

The eye image outputted from the output unit 130 may be used for authentication processing (matching processing) using information about the iris region. Specifically, the eye image may be used as a registration image or a matching image in the authentication processing. A specific configuration and operation when the eye image is used for the authentication processing will be described in detail in another example embodiment later.

### (Technical Effect)

Next, a technical effect obtained by the first information processing apparatus 10 will be described.

As described in FIG. 1 to FIG. 3, in the first information processing apparatus 10, the unimaged region in the eye image is identified, and the eye image is outputted in a state of containing the information about the unimaged region. This enables the target or the like to appropriately grasp the unimaged region (i.e., the region that is not yet captured) in the eye image.

### <Second Example Embodiment>

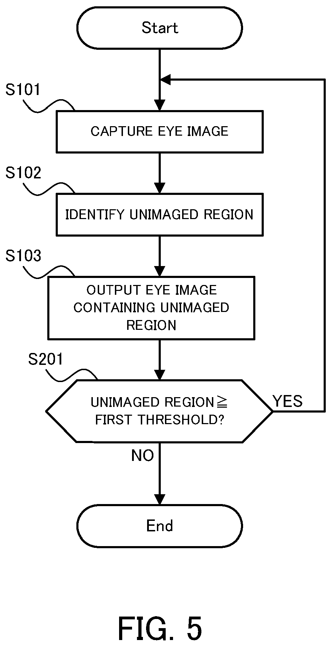

A second example embodiment will be described with reference to FIG. 4 and FIG. 5. Note that the second example embodiment partially differs from the first example embodiment described above only in its configuration and operation, and may be the same as the first example embodiment in the other parts. Therefore, the following description will detail the parts differing from the first example embodiment, omitting descriptions for other overlapping parts as appropriate.

### (Functional Configuration)

First, with reference to FIG. 4, a functional configuration of a second information processing apparatus 10 will be described. FIG. 4 is a block diagram illustrating the functional configuration of the second information processing apparatus. In FIG. 4, the same reference numerals are used for the same components as those illustrated in FIG. 2.

As illustrated in FIG. 4, the second information processing apparatus 10 includes, as components for realizing its functions, the image capture unit 110, the unimaged region identification unit 120, the output unit 130, and an image capture control unit 140. That is, the second processing apparatus 10 further includes the image capture control unit 140 in addition to the configuration described in the first example embodiment (see FIG. 2). The image capture control unit 140 may be, for example, a processing block realized by the aforementioned processor 11 (see FIG. 1).

The image capture control unit 140 is configured to output an instruction to the image capture unit 110 to capture the eye image. More specifically, the image capture control unit 140 outputs an instruction to the image capture unit 110 to capture a new eye image when the unimaged region is greater than or equal to a first threshold. Here, the "first threshold" is a value for determining whether or not to output an instruction to the image capture unit 110 to acquire a new eye image. That is, the "first threshold" is a value for determining that the unimaged region in the eye image is excessive (in other words, that the iris region that can be imaged/captured is insufficient). The first threshold may be a predetermined fixed value or a variable value corresponding to some physical quantity or parameter. The first threshold may be set appropriately depending on the intended use of the eye image or the like, for example. The first threshold may be a threshold corresponding to the area of the unimaged region. Alternatively, the first threshold may be a threshold corresponding to a ratio of the unimaged region to the entire iris region. In a case where the first threshold is a variable value, the first threshold may be set as follows. For example, in a case where an authentication success rate for iris recognition using the eye image outputted from the output unit 130 tends to decrease while the first threshold is set to a first value, the decrease in the authentication success rate may be due to the unimaged region (in other words, the iris region that can be imaged may be insufficient). Therefore, to reduce the unimaged region in the eye image (in other words, to increase the iris region that can be imaged), the first threshold may be set to a second value that is smaller than the first value. That is, the first threshold may be dynamically set depending on the authentication success rate associated with the iris recognition.

### (Operation Flow)

Next, with reference to FIG. 5, an operation flow in the second information processing apparatus 10 will be described. FIG. 5 is a flowchart illustrating the operation flow in the second processing apparatus. Note that in FIG. 5, the same reference numerals are used for the same steps as those illustrated in FIG. 3.

As illustrated in FIG. 5, when the operation of the second processing apparatus 10 is started, the image capture unit 110 first captures the eye image containing the target's iris region (Step S101). Subsequently, the unimaged region identification unit 120 identifies the unimaged region in the eye image captured by the image capture unit 110 (Step S102).

Then, the output unit 130 outputs the eye image captured by the image capture unit 110, including the information about the unimaged region identified by the unimaged region identification unit 120 (Step S103). Subsequently, the image capture control unit 140 determines whether or not the unimaged region is greater than or equal to the first threshold, using the information about the unimaged region identified by the unimaged region identification unit 120 (Step S204).

In a case where the unimaged region is greater than or equal to the first threshold (Step S204: YES), the image capture control unit 140 controls the image capture unit 110 to capture a new eye image. This causes the processing to be executed again from the Step S101. Thus, in a case where the unimaged region is greater than or equal to the first threshold, the capture of the eye image is repeated. In a case where the newly captured eye image includes the iris region that is not included in the previously captured eye image, the unimaged region gradually decreases.

In a case where the unimaged region is not greater than or equal to the first threshold (Step S204: NO), the image capture control unit 140 does not control the image capture unit 110 to capture a new eye image. Therefore, when the unimaged region is no longer greater than or equal to the first threshold, a series of processing steps is ended.

### (Technical Effect)

Next, a technical effect obtained by the second information processing apparatus 10 will be described.

As described in FIG. 4 and FIG. 5, in the second information processing apparatus 10, a new eye image is captured in a case where the unimaged region is not greater than or equal to the first threshold. This allows the unimaged region to be reduced (in other words, the previously imaged iris region to be increased) by repeatedly capturing the eye image.

### <Third Example Embodiment>

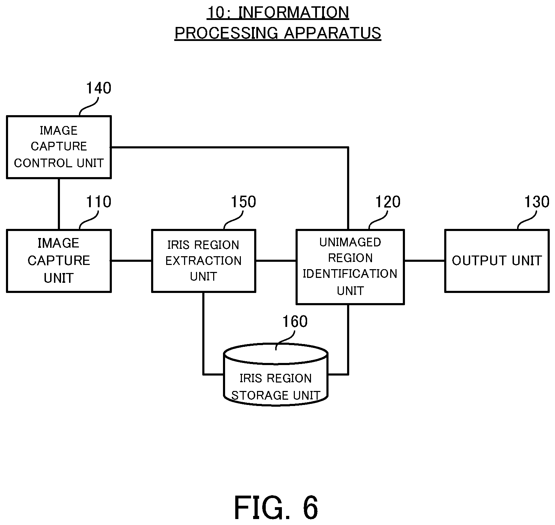

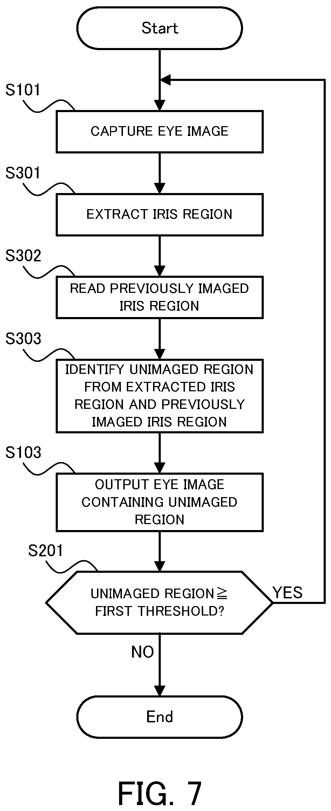

A third example embodiment will be described with reference to FIG. 6 and FIG. 7. Note that the third example embodiment partially differs from the second example embodiment described above only in its configuration and operation, and may be the same as the first and second example embodiments in the other parts. Therefore, the following description will detail the parts differing from the already described example embodiments, omitting descriptions for other overlapping parts as appropriate.

### (Functional Configuration)

First, with reference to FIG. 6, a functional configuration of a third information processing apparatus 10 will be described. FIG. 6 is a block diagram illustrating the functional configuration of the third information processing apparatus. Note that in FIG. 6, the same reference numerals are used for the same components as those illustrated in FIG. 4.

As illustrated in FIG. 6, the third information processing apparatus 10 includes, as components for realizing its functions, the image capture unit 110, the unimaged region identification unit 120, the output unit 130, the image capture control unit 140, an iris region extraction unit 150, and an iris region storage apparatus 160. That is, the third information processing apparatus 10 further includes the iris region extraction unit 150 and the iris region storage unit 160, in addition to the configuration described in the second example embodiment (see FIG. 4). The iris region extraction unit 150 may be, for example, a processing block realized by the aforementioned processor 11 (see FIG. 1). The iris region storage unit 160 may, for example, be configured to include the aforementioned storage apparatus 14.

The iris region extraction unit 150 is configured to extract the target's iris region from the eye image captured by the image capture unit 110. That is, the iris region extraction unit 150 is configured to extract the iris region that can be captured by the image capture unit 110. A method of extracting the iris region is not particularly limited, but the iris region extraction unit 150 may, for example, use a trained/learned machine learning model to extract the iris region. More specifically, the iris region extraction unit 150 may use a neural network that is trained/learned to extract the iris region through semantic segmentation or the like to extract the iris region from the eye image. Information about the iris region extracted by the iris region extraction unit 150 is configured to be outputted to both the unimaged region identification unit 120 and the iris region storage unit 160.

The iris region storage unit 160 is configured to store the iris region extracted by the iris region extraction unit 150 as the previously imaged iris region. The iris region storage unit 160 is configured to store a plurality of imaged iris regions, including the iris region(s) extracted in the past by the iris region extraction unit 150. Therefore, as described in the second example embodiment, in a case where the eye image is repeatedly captured, the previously imaged iris region accumulates in the iris region storage unit 160, and the previously imaged iris region gradually increases (i.e., the area of imaged iris regions gradually increases). Information about the previously imaged iris region stored in the iris region storage unit 160 is readable as appropriate by the unimaged region identification unit 120.

The unimaged region identification unit 120 in the third information processing apparatus 10 identifies the unimaged region, using the iris region extracted by the iris region extraction unit 150 and the previously imaged iris region stored in the iris region storage unit 160. That is, the unimaged region identification unit 120 identifies the unimaged region, using the iris region extracted from the eye image captured by the image capture unit 110 and the iris region(s) extracted in the past. The unimaged region identification unit 120 may identify, as the unimaged region, a region in the target's iris region that is not included in either the iris region extracted from the eye image or the previously imaged iris region.

### (Operation Flow)

Next, with reference to FIG. 7, an operation flow in the third information processing apparatus 10 will be described. FIG. 7 is a flowchart illustrating the operation flow in the third information processing apparatus. Note that in FIG. 7, the same reference numerals are used for the same steps as those illustrated in FIG. 5.

As illustrated in FIG. 7, when the operation of the third information processing apparatus 10 is started, the image capture unit 110 first captures the eye image containing the target's iris region (Step S101). Subsequently, the iris region extraction unit 150 extracts the target's iris region from the eye image captured by the image capture unit 110 (Step S301).

Then, the unimaged region identification unit 120 receives the information about the iris region extracted by the iris region extraction unit 150, and reads information about the previously imaged iris region from the iris region storage unit 160 (Step S302). The unimaged region identification unit 120 then identifies the unimaged region, based on the iris region extracted by the iris region extraction unit 150 and the previously imaged iris region read from the iris region storage unit 160 (Step S303).

Then, the output unit 130 outputs the eye image captured by the image capture unit 110, including the information about the unimaged region identified by the unimaged region identification unit 120 (Step S103). Subsequently, the image capture control unit 140 determines whether or not the unimaged region is greater than or equal to the first threshold, using the information about the unimaged region identified by the unimaged region identification unit 120 (Step S204).

In a case where the unimaged region is greater than or equal to the first threshold (Step S204: YES), the image capture control unit 140 controls the image capture unit 110 to capture a new eye image. This causes the processing to be executed again from the Step S101. Furthermore, in a case where the unimaged region is greater than or equal to the first threshold, the iris region storage unit 160 stores, as the previously imaged iris region, the iris region extracted by the iris region extraction unit 140.

On the other hand, in a case where the unimaged region is less than the first threshold (Step S204: NO), the image capture control unit 140 does not control the image capture unit 110, and a series of processing steps is ended.

### (Technical Effect)

Next, a technical effect obtained by the third information processing apparatus 10 will be described.

As described in FIG. 6 and FIG. 7, in the third information processing apparatus 10, the iris region is extracted from the eye image, and the extracted iris region is stored as the previously imaged iris region. This enables the user to more appropriately identify the unimaged region by outputting the information about the iris region that is already imaged.

### <Fourth Example Embodiment>

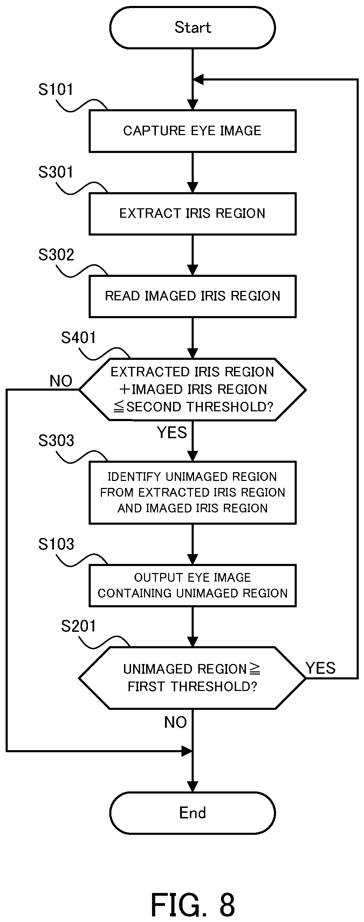

A fourth example embodiment will be described with reference to FIG. 8. Note that the fourth example embodiment partially differs from the third example embodiment described above only in its operation, and may be the same as the first to third example embodiments in the other parts. Therefore, the following description will detail the parts differing from the already described example embodiments, omitting descriptions for other overlapping parts as appropriate.

### (Operation Flow)

First, with reference to FIG. 8, an operation flow in a fourth information processing apparatus 10 will be described. FIG. 8 is a flowchart illustrating the operation flow in the fourth information processing apparatus. Note that in FIG. 8, the same reference numerals are used for the same steps as those illustrated in FIG. 7.

As illustrated in FIG. 8, when the operation of the fourth information processing apparatus 10 is started, the image capture unit 110 first captures the eye image containing the target's iris region (Step S101). Subsequently, the iris region extraction unit 150 extracts the target's iris region from the eye image captured by the image capture unit 110 (Step S301).

Then, the unimaged region identification unit 120 receives the information about the iris region extracted by the iris region extraction unit 150, and reads the information about the previously imaged iris region from the iris region storage unit 160 (Step S302). The unimaged region Identifier 120 then determines whether or not a combined region (hereinafter referred to as an "acquired iris region") of the iris region extracted by the iris region extraction unit and the previously imaged iris region stored in the iris region storage unit 160 is less than or equal to a second threshold (Step S401).

Here, the "second threshold" is a threshold set in advance to determine whether or not the acquired region is insufficient. The second threshold may be set appropriately depending on the intended use of the eye image or the like, for example. The second threshold may be a threshold corresponding to the area of the acquired region. Alternatively, the second threshold may be a threshold corresponding to a ratio of the acquired region to the entire iris region.

In a case where the acquired region is not less than or equal to the second threshold (Step S401: NO), the subsequent processing is omitted. That is, the unimaged region remains unidentified, and a series of processing steps is ended. On the other hand, in a case where the acquired region is less than or equal to the second threshold (Step S401: YES), the unimaged region identification unit 120 identifies the unimaged region, based on the iris region extracted by the iris region extraction unit 150 and the previously imaged iris region (i.e., the acquired region) read from the iris region storage unit 160 (Step S303).

Then, the output unit 130 outputs the eye image captured by the image capture unit 110, including the information about the unimaged region identified by the unimaged region identification unit 120 (Step S103). Subsequently, the image capture control unit 140 determines whether or not the unimaged region is greater than or equal to the first threshold, using the information about the unimaged region identified by the unimaged region identification unit 120 (Step S204).

In a case where the unimaged region is greater than or equal to the first threshold (Step S204: YES), the image capture control unit 140 controls the image capture unit 110 to capture a new eye image. This causes the processing to be executed again from the Step S101. Furthermore, in a case where the unimaged region is greater than or equal to the first threshold, the iris region storage unit 160 stores, as the previously imaged iris region, the iris region extracted by the iris region extraction unit 140.

On the other hand, in a case where the unimaged region is not greater than or equal to the first threshold (Step S204: NO), the image capture control unit 140 does not control the image capture unit 110 to capture a new eye image. Therefore, when the unimaged region is no longer greater than or equal to the first threshold, a series of processing steps is ended.

### (Technical Effect)

Next, a technical effect obtained by the fourth information processing apparatus 10 will be described.

As described in FIG. 8, in the fourth information processing apparatus 10, the unimaged region is identified in a case where the acquired region is less than or equal to the second threshold. Here, in a case where the acquired region is not less than or equal to the second threshold, it may be determined that the iris region is sufficiently imaged/captured. Conversely, in a case where the acquired region is less than or equal to the second threshold, it may be determined that the previously imaged iris region is insufficient. Therefore, identifying the unimaged region in such a case enables the target or the like to appropriately grasp the insufficient iris region.

### <Fifth Example Embodiment>

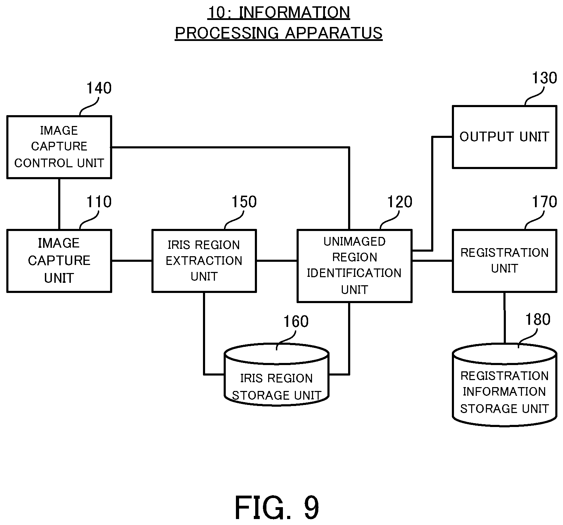

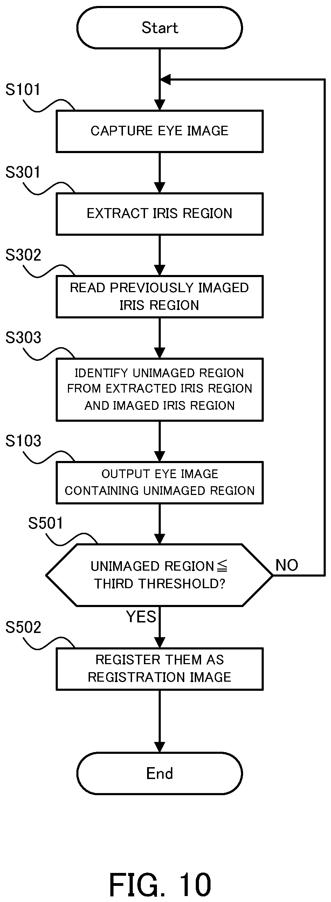

A fifth example embodiment will be described with reference to FIG. 9 and FIG. 10. Note that the fifth example embodiment partially differs from the first to fourth example embodiments described above only in its configuration and operation, and may be the same as the first to fourth example embodiments in the other parts. Therefore, the following description will detail the parts differing from the already described example embodiments, omitting descriptions for other overlapping parts as appropriate.

### (Functional Configuration)

First, with reference to FIG. 9, a functional configuration of a fifth information processing apparatus 10 will be described. FIG. 9 is a block diagram illustrating the functional configuration of the fifth information processing apparatus. Note that in FIG. 9, the same reference numerals are used for the same components as those illustrated in FIG. 6.

As illustrated in FIG. 9, the fifth information processing apparatus 10 includes, as components for realizing its functions, the image capture unit 110, the unimaged region identification unit 120, the output unit 130, the image capture control unit 140, the iris region extraction unit 150, the iris region storage apparatus 160, a registration unit 170, and a registration information storage apparatus 180. That is, the fifth information processing apparatus 10 further includes the registration unit 170 and the registration information storage unit 180, in addition to the configuration described in the fourth example embodiment (see FIG. 6). The registration unit 170 may be, for example, a processing block realized by the aforementioned processor 11 (see FIG. 1). The registration information storage unit 180 may, for example, be configured to include the aforementioned storage apparatus 14.

The registration unit 170 is configured to register the eye image of the target captured by the image capture unit 110 as a registration image used for matching. More specifically, in a case where the unimaged region, which is identified from the previously imaged iris region and a newly imaged iris region contained in an eye image newly captured under the control of the image capture control unit 140, is less than or equal to a third threshold, the registration unit 170 registers both the previously imaged iris region and the newly imaged iris region (i.e., the acquired region) as the registration image used for matching. The previously imaged iris region and the newly imaged iris region may be stored separately, or may be stored by combining a plurality of images. In a case of combining images, the eye image may be normalized such that the center and radius of the iris circle in the iris region extracted by the iris region extraction unit 150 have the same value in each image before the combination. The combining method may include filling the iris region sequentially from the oldest image. For example, when a new image is captured, the previously imaged iris region may be ignored, and only the unimaged region may be filled. Data to be registered may be other than images; feature quantities for identifying an individual, which are extracted from the eye image, may be stored.

The "third threshold" here is a threshold set in advance to determine whether or not the unimaged region is sufficiently small. The third threshold may be set appropriately depending on the required quality of the registration image or the like. The third threshold may be a threshold corresponding to the area of the unregistered region. Alternatively, the third threshold may be a threshold corresponding to the ratio of the unregistered region to the entire iris region.

The registration information storage unit 180 is configured to store a plurality of registration images. The registration information storage unit 180 stores, as the registration images, images that are determined to be registered by the registration unit 170 as described above (i.e., the acquired region in a case where the unimaged region is less than or equal to the third threshold). The registration images stored in the registration information storage unit 180 are read as appropriate during matching. The matching using the registration images stored in the registration information storage unit 180 will be described in detail in another example embodiment later. Note that what is registered in the registration information storage unit 180 may not necessarily be images. For example, feature quantities for identifying an individual, which are extracted from images, may be stored.

### (Operation Flow)

Next, with reference to FIG. 10, an operation flow in the fifth information processing apparatus 10 will be described. FIG. 10 is a flowchart illustrating the operation flow in the fifth information processing apparatus. Note that in FIG. 10, the same reference numerals are used for the same steps as those illustrated in FIG. 7.

As illustrated in FIG. 10, when the operation of the fifth information processing apparatus 10 is started, the image capture unit 110 first captures the eye image containing the target's iris region (Step S101). Subsequently, the iris region extraction unit 150 extracts the target's iris region from the eye image captured by the image capture unit 110 (Step S301).

Then, the unimaged region identification unit 120 receives the information about the iris region extracted by the iris region extraction unit 150, and reads the information about the previously imaged iris region from the iris region storage unit 160 (Step S302). The unimaged region identification unit 120 then identifies the unimaged region, based on the iris region extracted by the iris region extraction unit 150 and the previously imaged iris region read from the iris region storage unit 160 (Step S303).

Then, the output unit 130 outputs the eye image captured by the image capture unit 110, including the information about the unimaged region identified by the unimaged region identification unit 120 (Step S103). Subsequently, the registration unit 170 determines whether or not the unimaged region is less than or equal to the third threshold, using the information about the unimaged region identified by the unimaged region identification unit 120 (Step S501).

In a case where the unimaged region is less than or equal to the third threshold (Step S501: YES), the registration unit 170 registers, as the registration image, both the newly imaged iris region and the previously imaged iris region contained in the eye image, in the registration information storage unit 180 (Step S502). The registration unit 170 may register a composite of the newly imaged iris region and the previously imaged iris region, as the registration image. Alternatively, the registration unit 170 may register the newly imaged iris region and the previously imaged iris region, not as an image, but as feature quantities extracted from the combined image.

On the other hand, in a case where the unimaged region is not less than or equal to the third threshold (Step S501: NO), the image capture control unit 140 controls the image capture unit 110 to capture a new eye image. This causes the processing to be executed again from the Step S101. That is, the third threshold here is also essentially used as the first threshold described in the second example embodiment (see FIG. 5). However, the first threshold and the third threshold may be set as separate values, and may be determined separately.

### (Technical Effect)

Next, a technical effect obtained by the fifth information processing apparatus 10 will be described.

As described in FIG. 9 and FIG. 10, in the fifth information processing apparatus 10, in a case where the unimaged region is less than or equal to the third threshold, the iris region acquired up to that point is registered as the registration image. This allows the eye image with a sufficiently small unimaged region to be registered as the registration image. Consequently, more appropriate matching processing may be performed. Note that not only the eye image, but also, for example, feature quantities for identifying an individual, which are extracted from the eye image with the sufficiently small unimaged region, may also be registered. In this case as well, more appropriate matching processing may be performed.

### <Sixth Example Embodiment>

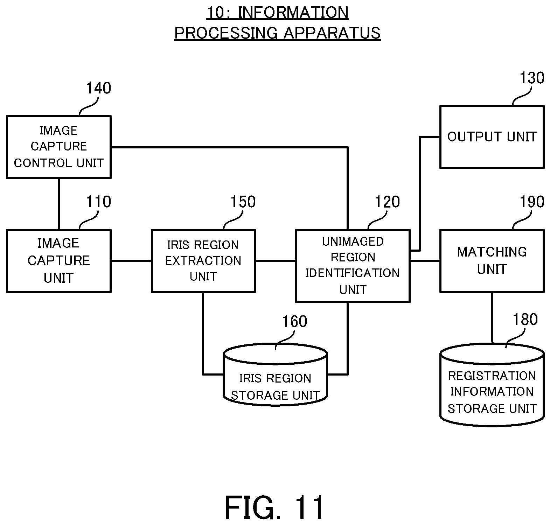

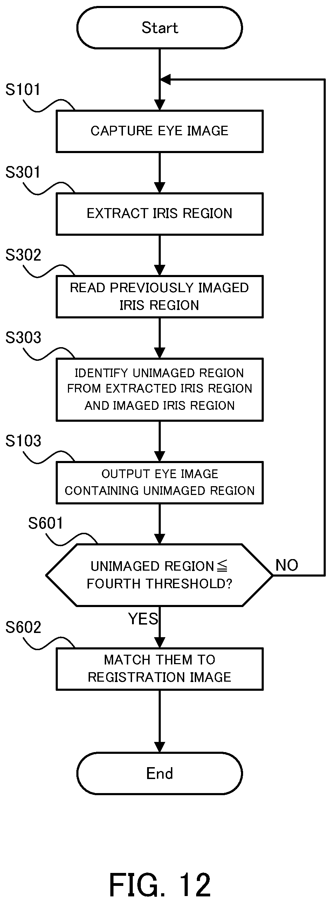

A sixth example embodiment will be described with reference to FIG. 11 and FIG. 12. Note that the sixth example embodiment partially differs from the first to fifth example embodiments described above only in its configuration and operation, and may be the same as the first to fifth example embodiments in the other parts. Therefore, the following description will detail the parts differing from the already described example embodiments, omitting descriptions for other overlapping parts as appropriate.

### (Functional Configuration)

First, with reference to FIG. 11, a functional configuration of a sixth information processing apparatus 10 will be described. FIG. 11 is a block diagram illustrating the functional configuration of the sixth information processing apparatus. Note that in FIG. 11, the same reference numerals are used for the same components as those illustrated in FIG. 9.

As illustrated in FIG. 11, the sixth information processing apparatus 10 includes, as components for realizing its functions, the image capture unit 110, the unimaged region identification unit 120, the output unit 130, the image capture control unit 140, the iris region extraction unit 150, the iris region storage unit 160, the registration information storage apparatus 180, and a matching unit 190. That is, the sixth information processing apparatus 10 further includes the matching unit 190 instead of the registration unit 170 in the configuration described in the fifth example embodiment (see FIG. 9). The matching unit 190 may be, for example, a processing block realized by the aforementioned processor 11 (see FIG. 1).

The matching unit 190 is configured to use the eye image of the target captured by the image capture unit 110, as a matching image for matching. More specifically, in a case where the unimaged region, which is identified from the previously imaged iris region and a newly imaged iris region contained in an eye image newly captured under the control of the image capture control unit 140, is less than or equal to a fourth threshold, the matching unit 190 uses both the newly imaged iris region and the previously imaged iris region (i.e. the acquired region), as the matching image for matching to the registration image registered in advance (i.e., the image stored in the registration information storage unit 180).

Here, the "fourth threshold" is a threshold set in advance to determine whether or not the unimaged region is sufficiently small. The fourth threshold may be set appropriately depending on the required quality of the registration image or the like. The fourth threshold may be a threshold corresponding to the area of the unimaged region. Alternatively, the fourth threshold may be a threshold corresponding to the ratio of the unimaged region to the entire iris region. The fourth threshold may be the same value as the aforementioned third threshold or a different value.

The matching unit 190 may use a composite of the newly imaged iris region and the previously imaged iris region, as the matching image. Furthermore, the matching unit 190 may not use the newly imaged iris region and the previously imaged iris region as the image for matching, but use feature quantities extracted from the image for matching.

### (Operation Flow)

Next, with reference to FIG. 12, an operation flow in the sixth information processing apparatus 10 will be described. FIG. 12 is a flowchart illustrating the operation flow in the sixth information processing apparatus. Note that in FIG. 12, the same reference numerals are used for the same steps as those illustrated in FIG. 10.

As illustrated in FIG. 12, when the operation of the sixth information processing apparatus 10 is started, the image capture unit 110 first captures the eye image containing the target's iris region (Step S101). Subsequently, the iris region extraction unit 150 extracts the target's iris region from the eye image captured by the image capture unit 110 (Step S301).

Then, the unimaged region identification unit 120 receives the information about the iris region extracted by the iris region extraction unit 150, and reads the information about the previously imaged iris region from the iris region storage unit 160 (Step S302). The unimaged region identification unit 120 then identifies the unimaged region, based on the iris region extracted by the iris region extraction unit 150 and the previously imaged iris region read from the iris region storage unit 160 (Step S303).

Then, the output unit 130 outputs the eye image captured by the image capture unit 110, including the information about the unimaged region identified by the unimaged region identification unit 120 (Step S103). Subsequently, the matching unit 190 determines whether or not the unimaged region is less than or equal to the fourth threshold, using the information about the unimaged region identified by the unimaged region identification unit 120 (Step S601).

In a case where the unimaged region is less than or equal to the fourth threshold (Step S601: YES), the registration unit 170 matches both the previously imaged iris region and the newly imaged iris region contained in the eye image, which serve as the mating image, to the registration image stored in the registration information storage unit 180 (Step S602). The matching unit 190 may also output a matching result. For example, the matching unit 190 may output information indicating whether the matching is successful or failed. Alternatively, the matching unit 190 may output a matching score between the registration image and the matching image. Alternatively, the matching unit 190 may output information about an individual identified by the matching. Alternatively, the matching unit 190 may output information for performing processing corresponding to the matching result (e.g., processing of opening or closing a gate, etc.).

On the other hand, in a case where the unimaged region is not less than or equal to the fourth threshold (Step S601: NO), the image capture control unit 140 controls the image capture unit 110 to capture a new eye image. This causes the processing to be executed from the Step S101. That is, the fourth threshold here is essentially also used as the first threshold described in the second example embodiment (see FIG. 5). However, the first threshold and the fourth threshold may be set as separate values, and may be determined separately.

### (Technical Effect)

Next, a technical effect obtained by the sixth information processing apparatus 10 will be described.

As described in FIG. 11 and FIG. 12, in the sixth information processing apparatus 10, in a case where the unimaged region is less than or equal to the fourth threshold, the iris region acquired up to that point is used as the matching image. This allows the eye image with a sufficiently small unimaged region to be used for matching, enabling more appropriate matching processing.

### <Seventh Example Embodiment>

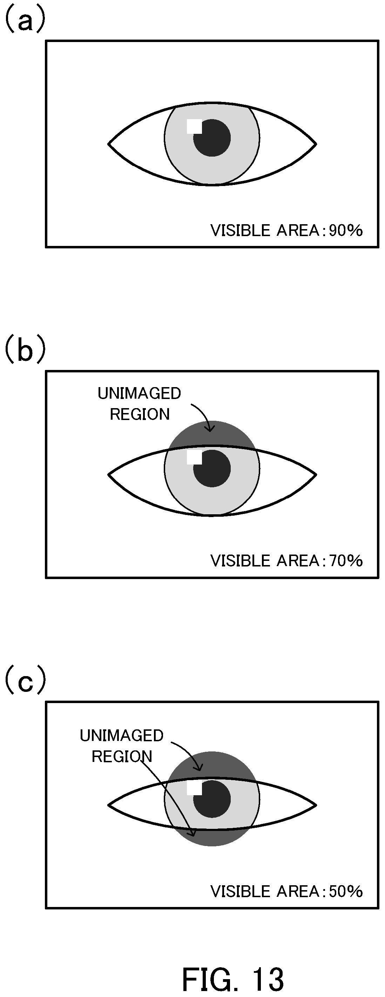

A seventh example embodiment will be described with reference to FIG. 13(a) to FIG. 13(c). Note that the seventh example embodiment describes specific output examples of the first to sixth example embodiments described above, and may be the same as the first to sixth example embodiments in the apparatus configuration and operation flow. Therefore, the following description will detail the parts differing from the already described example embodiments, omitting descriptions for other overlapping parts as appropriate.

### (Highlighted Display)

First, with reference to FIG. 13(a) to FIG. 13(c), display examples of the eye image and the unimaged region using a seventh information processing apparatus 10 will be specifically described. FIG. 13(a) to FIG. 13(c) are plan views illustrating display examples of guidance information in the seventh information processing apparatus.

As illustrated in FIG. 13(a) to FIG. 13(c), in the seventh information processing apparatus 10, the unimaged region is superimposed and displayed on the eye image via the output of the output unit 130. Note that in FIG. 13(a), only the eye image is displayed without the unimaged region. This is because a visible area in the iris region is 90% and the unimaged region is thus not identified (e.g., refer to the fourth example embodiment). On the other hand, in FIG. 13(b), a part obscured by the upper eyelid is displayed as the unimaged region. Thus, the unimaged region may be displayed as a region indicating a part that is actually not visible (i.e., not captured in the eye image). In FIG. 13(c), both the part obscured by the upper eyelid and a part obscured by the lower eyelid are displayed as the unimaged region. Thus, the unimaged region may be displayed as a plurality of regions.

Especially in the seventh information processing apparatus 10, the unimaged region is displayed in a highlighted manner. For example, the unimaged region may be displayed in a highly saturated, eye-catching color. More specifically, the unimaged region may be displayed as a region filled with an eye-catching color or as a region outlined with a line in an eye-catching color. Furthermore, the unimaged region may be displayed with movement, for example. Specifically, the unimaged region may be displayed by changing color or flashing/blinking. Note that an aspect of highlighting the unimaged region is not limited to the examples given here, and other techniques may be appropriately adopted for highlighting.

### (Technical Effect)

Next, a technical effect obtained by the seventh information processing apparatus 10 will be described.

As described in FIG. 13, in the seventh information processing apparatus 10, the unimaged region is highlighted. This makes the unimaged region to stand out, enabling the target or the like to appropriately grasp the region that is not yet imaged.

### <Eighth Example Embodiment>

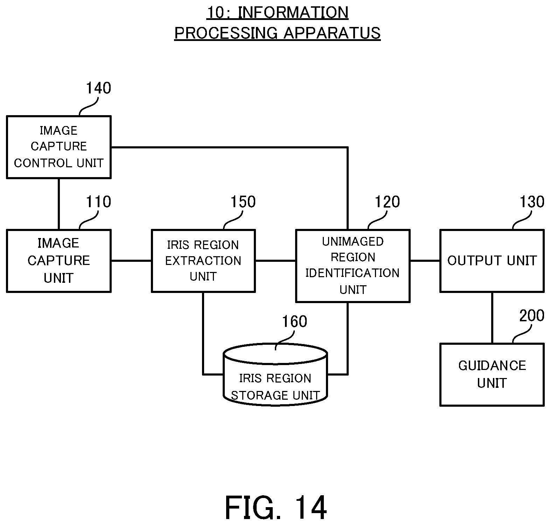

An eighth example embodiment will be described with reference to FIG. 14. Note that the eighth example embodiment partially differs from the first to seventh example embodiments described above only in its configuration and operation, and may be the same as the first and seventh example embodiments in the other parts. Therefore, the following description will detail the parts differing from the already described example embodiments, omitting descriptions for other overlapping parts as appropriate.

### (Functional Configuration)

First, with reference to FIG. 14, a functional configuration of an eighth information processing apparatus 10 will be described. FIG. 14 is a block diagram illustrating the functional configuration of the eighth information processing apparatus. Note that in FIG. 14, the same reference numerals are used for the same components as those illustrated in FIG. 6.

As illustrated in FIG. 14, the eighth information processing apparatus 10 includes, as components for realizing its functions, the image capture unit 110, the unimaged region identification unit 120, the output unit 130, the image capture control unit 140, the iris region extraction unit 150, the iris region storage apparatus 160, and a guidance unit 200. That is, the eighth information processing apparatus 10 further includes the guidance unit 200 in addition to the configuration described in the third example embodiment (see FIG. 6). The guidance unit 200 may be, for example, a processing block realized by the aforementioned processor 11 (see FIG. 1).

The guidance unit 200 is configured to output guidance information for guiding the target such that the iris region contained in the eye image changes. The guidance unit 200 may, for example, output information for the target to change their gaze direction, as the guidance information. When the target's gaze direction changes, the position of the iris region also changes, for example, allowing a part previously obscured by the eyelid to be captured. For example, when the gaze direction changes upward, a part previously obscured by the lower eyelid can be captured. Similarly, when the gaze direction changes downward, a part previously obscured by the upper eyelid can be captured. More specific examples of the guidance information will be described in another example embodiment later.

Although the guidance unit 200 and the output unit 130 are illustrated separately here, the guidance unit 200 may be configured as a part of the output unit 130. Specifically, the output unit 130 may be configured to have a function of outputting the guidance information in addition to the eye image and the information about the unimaged region.

### (Technical Effect)

Next, a technical effect obtained by the eighth information processing apparatus 10 will be described.

As described in FIG. 14, in the eighth information processing apparatus 10, the guidance information is outputted toward the target. This enables the previously hidden iris region to be captured by guiding the target's movement. Consequently, the unimaged region may be reduced.

### <Ninth Example Embodiment>

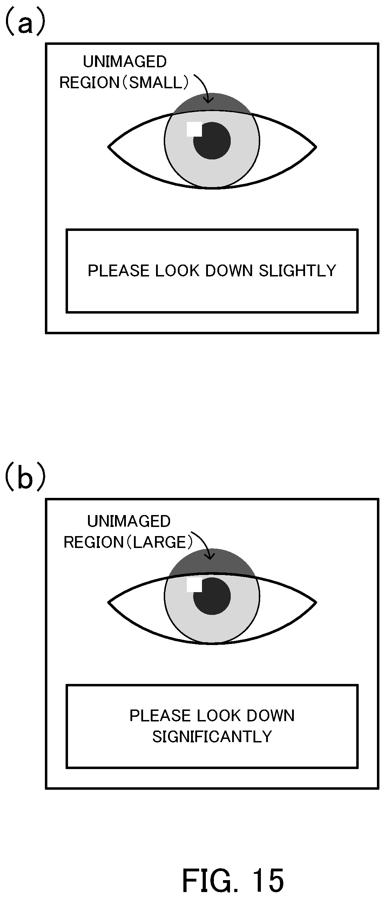

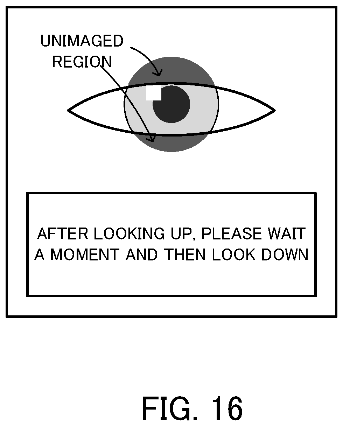

A ninth example embodiment will be described with reference to FIG. 15(a) and FIG. 15(b) and FIG. 16. Note that the ninth example embodiment partially differs from the eighth example embodiment described above only in its operation, and may be the same as the first and eighth example embodiments in the other parts. Therefore, the following description will detail the parts differing from the already described example embodiments, omitting descriptions for other overlapping parts as appropriate.

### (Display of Guidance Information)

First, with reference to FIG. 15(a) and FIG. 15(b) and FIG. 16, display examples of the guidance information in a ninth information processing apparatus 10 will be specifically described. FIG. 15(a) and FIG. 15(b) are plan views (Part 1) illustrating display examples of the guidance information in a ninth information processing apparatus. FIG. 16 is a plan view (Part 2) illustrating a display example of the guidance information in the ninth information processing apparatus.

As illustrated in FIG. 15, in the ninth information processing apparatus 10, the guidance unit 200 outputs the guidance information based on at least one of the area and position of the unimaged region. For example, in the example illustrated in FIG. 15(a), there is a relatively small unimaged region that is obscured by the upper eyelid and cannot be captured. In this case, a message "Please look down slightly" may be displayed as the guidance information. Displaying such a message allows the target to shift their gaze direction slightly downward, enabling the image capture of the part previously obscured by the upper eyelid. Furthermore, in the example illustrated in FIG. 15(b), there is a relatively large unimaged region that is obscured by the upper eyelid and cannot be captured. In this case, a message "Please look down significantly" may be displayed as the guidance information. Displaying such a message allows the target to shift their gaze direction significantly downward, enabling the image capture of the part previously obscured by the upper eyelid.

As illustrated in FIG. 16, the guidance unit 200 may output a plurality of pieces of guidance information. In the example illustrated in FIG. 16, there is an unimaged region that is obscured by the upper eyelid and cannot be captured, and another unimaged region that is obscured by the lower eyelid and cannot be captured. In this case, a message "After looking up, please wait a moment and then look down" may be displayed as the guidance information. Displaying such a message allows the target to first move their gaze direction upward, enabling the image capture of the part previously obscured by the lower eyelid. A first eye image is captured in this timing. Subsequently, by the target moving their gaze direction downward, the part previously obscured by the upper eyelid can be captured. Capturing a second eye image in this timing, together with the first image, allows the image capture of parts corresponding to the two unimaged regions.

Note that described here is an example of displaying a text-based message as the guidance information, but the guidance information is not limited to this aspect. For example, the guidance information may be displayed with an arrow indicating a guidance direction, or as a target guide moving in the guidance direction. The target guide may, for instance, be moved slowly to guide only the gaze. Conversely, the target guide may also be moved rapidly to guide only the gaze. Furthermore, in a case where the iris region cannot be sufficiently captured in a single image capture, a movement speed of the target guide may be slowed down, and then, a plurality of eye images may be captured. Alternatively, the guidance information may be audio-outputted via a speaker or a similar device. The guidance information may also be outputted as a combination of those different types of guidance information.

### (Technical Effect)

Next, a technical effect obtained by the ninth information processing apparatus 10 will be described.

As described in FIG. 15 and FIG. 16, in the ninth information processing apparatus 10, the guidance information is outputted based on the area and position of the unimaged region. This enables the unimaged region to be brought into a more suitable state for capturing images.

### <Tenth Example Embodiment>

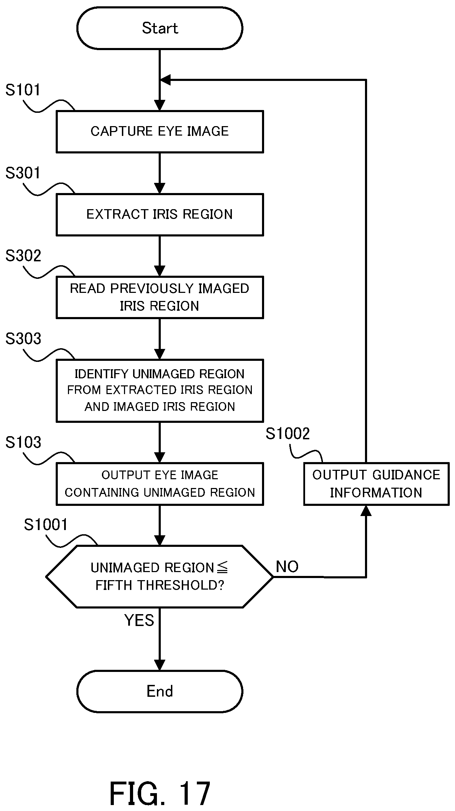

A tenth example embodiment will be described with reference to FIG. 17. Note that the tenth example embodiment partially differs from the eighth and ninth example embodiments described above in its operation, and may be the same as the first and ninth example embodiments in the other parts. Therefore, the following description will detail the parts differing from the already described example embodiments, omitting descriptions for other overlapping parts as appropriate.

### (Operation Flow)

First, with reference to FIG. 17, an operation flow in a tenth information processing apparatus 10 will be described. FIG. 17 is a flowchart illustrating the operation flow in the tenth information processing apparatus. Note that in FIG. 17, the same reference numerals are used for the same steps as those illustrated in FIG. 7.

As illustrated in FIG. 17, when the operation of the tenth information processing apparatus 10 is started, the image capture unit 110 first captures the eye image containing the target's iris region (Step S101). Subsequently, the iris region extraction unit 150 extracts the target's iris region from the eye image captured by the image capture unit 110 (Step S301).

Then, the unimaged region identification unit 120 receives the information about the iris region extracted by the iris region extraction unit 150, and reads the information about the previously imaged iris region from the iris region storage unit 160 (Step S302). The unimaged region identification unit 120 then identifies the unimaged region, based on the iris region extracted by the iris region extraction unit 150 and the previously imaged iris region read from the iris region storage unit 160 (Step S303).

Then, the output unit 130 outputs the eye image captured by the image capture unit 110, including the information about the unimaged region identified by the unimaged region identification unit 120 (Step S103). Subsequently, the guidance unit 200 determines whether or not the unimaged region is less than or equal to a fifth threshold, using the information about the unimaged region identified by the unimaged region identification unit 120 (Step S1001).

Here, the "fifth threshold" is a threshold set in advance to determine whether or not the unimaged region is sufficiently small. The fifth threshold may be set appropriately depending on the intended use of the eye image or the like. The fifth threshold may be a threshold corresponding to the area of the unimaged region. Alternatively, the fifth threshold may be a threshold corresponding to the ratio of the unimaged region to the entire iris region.

In a case where the unimaged region is not less than or equal to the fifth threshold (Step S1001: NO), the guidance unit 200 outputs the guidance information corresponding to the unimaged region (Step S1002). Subsequently, the image capture control unit 140 controls the image capture unit 110 to capture a new eye image. This causes the processing to be executed again from the Step S101. That is, the fifth threshold here is essentially also used as the first threshold described in the second example embodiment (see FIG. 5). However, the first threshold and the fifth threshold may be set as separate values, and may be determined separately.

On the other hand, in a case where the unimaged region is less than or equal to the fifth threshold (Step S1001: NO), the guidance unit 200 does not output the guidance information. Furthermore, the image capture control unit 140 does not control the image capture unit 110 to capture a new eye image. Therefore, when the unimaged region is less than or equal to the fifth threshold, a series of processing ends.

### (Technical Effect)

Next, a technical effect obtained by the tenth information processing apparatus 10 will be described.

As described in FIG. 17, in the tenth information processing apparatus 10, the guidance information is repeatedly outputted until the unimaged region becomes less than or equal to the fifth threshold. This allows the unimaged region to be gradually reduced by the guidance information until it becomes sufficiently small.

### <Eleventh Example Embodiment>

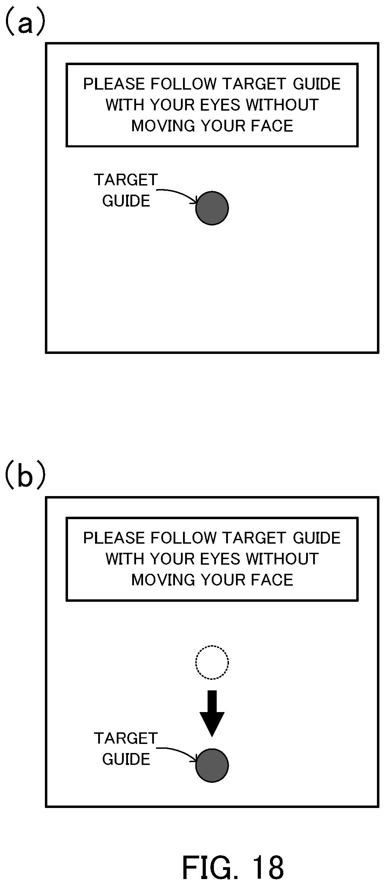

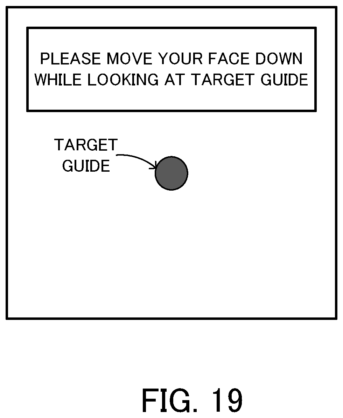

An eleventh example embodiment will be described with reference to FIG. 18(a) and FIG. 18(b) and FIG. 19. Note that the eleventh example embodiment partially differs from the eighth to tenth example embodiments described above only in its operation, and may be the same as the first and tenth example embodiments in the other parts. Therefore, the following description will detail the parts differing from the already described example embodiments, omitting descriptions for other overlapping parts as appropriate.

### (First Guidance)

First, with reference to FIG. 18(a) and FIG. 18(b), first guidance display in an eleventh information processing apparatus 10 will be described. FIG. 18(a) and FIG. 18(b) are plan views illustrating display examples of first guidance in the eleventh information processing apparatus.

As illustrated in FIG. 18, in the eleventh information processing apparatus 10, the first guidance is performed to guide the target to change their gaze direction with their face orientation fixed. In the first guidance, for example, a text-based message and a target guide that prompts the target to move their gaze direction are displayed as the guidance information.

In the example illustrated in FIG. 18(a), a message "Please follow the target guide with your eyes without moving your face" is displayed. The target guide is then displayed near the center of a screen. The target guide starts to move in predetermined timing. In the example illustrated in FIG. 18(b), the target guide is moving downward. In this case, the target's gaze direction moves downward. Consequently, it is possible to capture images of the region that is previously obscured by the upper eyelid and cannot be captured.

### (Second Guidance)

Next, with reference to FIG. 19, second guidance display in the eleventh information processing apparatus 10 will be described. FIG. 19 is a plan view illustrating a display example of e second guidance in the eleventh information processing apparatus.

As illustrated in FIG. 19, in the eleventh information processing apparatus 10, the second guidance is performed to guide the target to change their facial orientation with their gaze direction fixed. In the second guidance, for example, a text-based message and a target guide for fixing the target's gaze direction are displayed as the guidance information.

In the example illustrated in FIG. 19, the target guide that does not move is displayed near the center of the screen. A message "Please move your face downward while looking at the target guide" is displayed. In this case, the facial orientation changes downward while the target's gaze direction remains fixed. As a result, the gaze moves upward relative to the face, enabling the image capture of the region that is previously obscured by the lower eyelid and cannot be captured.

### (Technical Effect)

Next, a technical effect obtained by the eleventh information processing apparatus 10 will be described.

As described in FIG. 18 and FIG. 19, in the eleventh information processing apparatus 10, both the first guidance and the second guidance are performed. This allows the guidance to be performed using a method suitable for the target. For example, even if the target has difficulty in responding to the first guidance, performing the second guidance makes it possible to change the region that can be captured. Similarly, even if the target has difficulty in responding to the second guidance, performing the first guidance makes it possible to change the region that can be captured.

### <Twelfth Example Embodiment>

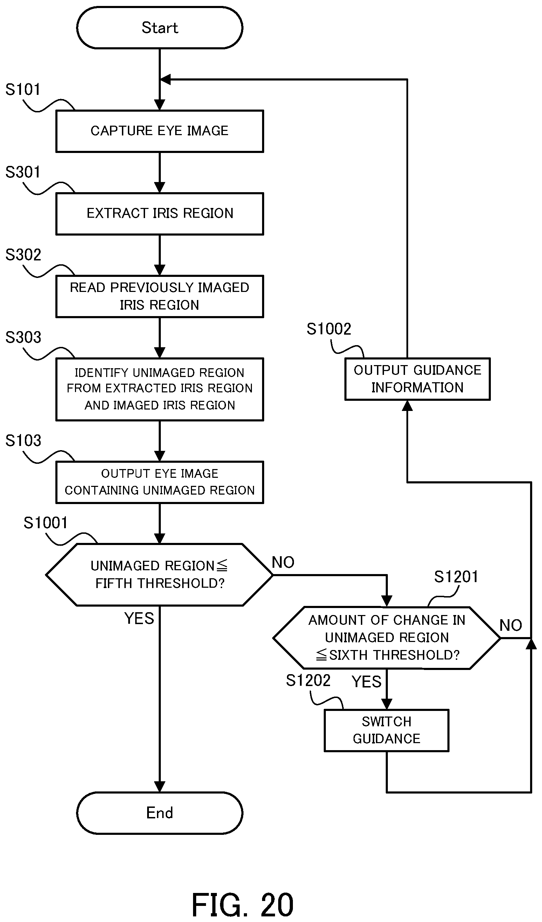

A twelfth example embodiment will be described with reference to FIG. 20. Note that the twelfth example embodiment partially differs from the eighth to eleventh example embodiments described above only in its operation, and may be the same as the first and eleventh example embodiments in the other parts. Therefore, the following description will detail the parts differing from the already described example embodiments, omitting descriptions for other overlapping parts as appropriate.

### (Operation Flow)

First, with refer to FIG. 20, an operation flow in a twelfth information processing apparatus 10 will be described. FIG. 20 is a flowchart illustrating the operation flow in the twelfth information processing apparatus. Note that in FIG. 20, the same reference numerals are used for the same steps as those illustrated in FIG. 17.

As illustrated in FIG. 20, when the operation of the twelfth information processing apparatus 10 is started, the image capture unit 110 first captures the eye image containing the target's iris region (Step S101). Subsequently, the iris region extraction unit 150 extracts the target's iris region from the eye image captured by the image capture unit 110 (Step S301).

Then, the unimaged region identification unit 120 receives the information about the iris region extracted by the iris region extraction unit 150, and reads the information about the previously imaged iris region from the iris region storage unit 160 (Step S302). The unimaged region identification unit 120 then identifies the unimaged region, based on the iris region extracted by the iris region extraction unit 150 and the previously imaged iris region read from the iris region storage unit 160 (Step S303).

Then, the output unit 130 outputs the eye image captured by the image capture unit 110, including the information about the unimaged region identified by the unimaged region identification unit 120 (Step S103). Subsequently, the guidance unit 200 determines whether or not the unimaged region is less than or equal to a fifth threshold, using the information about the unimaged region identified by the unimaged region identification unit 120 (Step S1001).

In a case where the unimaged region is not less than or equal to the fifth threshold (Step S1001: NO), the guidance unit 200 determines whether or not an amount of change in the unimaged region (i.e., a difference between the unimaged region identified when the eye image is previously captured and the unimaged region identified when the eye image is currently captured) is less than or equal to a sixth threshold (Step S1201).

Here, the "sixth threshold" is a threshold set in advance to determine whether or not the amount of change in the unimaged region is smaller than expected (in other words, whether or not a guidance effect is weak). The sixth threshold may be set appropriately based on an aspect of the guidance information that is performed previously, or the like. The sixth threshold may be a threshold corresponding to an amount of change in the area of the unimaged region. Alternatively, the sixth threshold may be a threshold corresponding to an amount of change in the ratio of the unimaged region to the entire iris region.

In a case where the amount of change in the unimaged region is less than or equal to the sixth threshold (Step S1201: YES), the guidance unit 200 switches a guidance method (Step S1202). Specifically, in a case where the first guidance (see FIG. 18) is performed up to the previous time, the second guidance (see FIG. 19) is performed from the next time. Conversely, in a case where the second guidance is performed up to the previous time, the first guidance is performed from the next time. Note that in a case where the amount of change in the unimaged region is not less than or equal to the sixth threshold (Step S1201: NO), the Step S1202 is omitted. That is, the guidance unit 200 does not switch the guidance method.

Then, the guidance unit 200 outputs the guidance information corresponding to the unimaged region (Step S1002). Subsequently, the image capture control unit 140 controls the image capture unit 110 to capture a new eye image. This causes the processing to be executed again from the Step S101.

On the other hand, in a case where the unimaged region is less than or equal to the fifth threshold (Step S1001: NO), the guidance unit 200 does not output the guidance information. Furthermore, the image capture control unit 140 does not control the image capture unit 110 to capture a new eye image. Therefore, when the unimaged region is less than or equal to the fifth threshold, a series of processing ends.

### (Technical Effect)

Next, a technical effect obtained by the twelfth information processing apparatus 10 will be described.

As described in FIG. 20, in the twelfth information processing apparatus 10, the first guidance and the second guidance are switched according to the amount of change in the unimaged region. This ensures that in a case where the guidance using one method is not successful, the guidance using the other method is performed. Consequently, the guidance is ultimately performed using the method suitable for the target, enabling an efficient reduction in the unimaged region.

### <Thirteenth Example Embodiment>

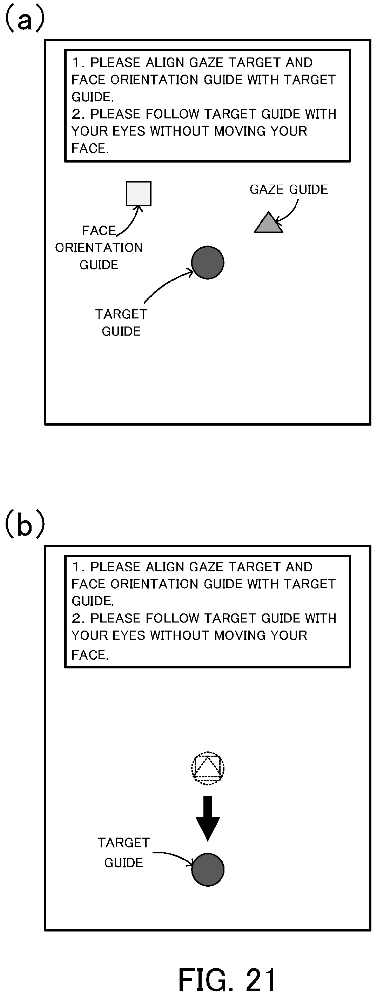

A thirteenth example embodiment will be described with reference to FIG. 21(a) and FIG. 21(b). Note that the thirteenth example embodiment partially differs from the eighth to twelfth example embodiments described above only in its operation, and may be the same as the first and twelfth example embodiments in the other parts. Therefore, the following description will detail the parts differing from the already described example embodiments, omitting descriptions for other overlapping parts as appropriate.

### (Guide Display)

First, with reference to FIG. 21(a) and FIG. 21(b), display examples of the guidance information in a thirteenth information processing apparatus 10 will be specifically described. FIG. 21(a) and FIG. 21(b) are plan views illustrating display examples of the guidance information in the thirteenth information processing apparatus.

As illustrated in FIG. 21(a) and FIG. 21(b), in the thirteenth information processing apparatus 10, the guidance unit 200 displays a gaze guide, a face orientation guide, and a target guide. The gaze guide indicates the target's gaze direction and moves in accordance with the target's gaze direction. The face orientation guide indicates the target's face orientation and moves in accordance with the target's face orientation. The target guide is a guide that prompts the target to change their gaze direction. The target guide starts to move in timing when both the gaze guide and the face orientation guide overlap.

In the example illustrated in FIG. 21(a), the guidance unit 200 displays a message "1. Please align the gaze guide and the face orientation guide with the target guide." Therefore, the target first adjusts their gaze direction and face orientation such that the gaze guide and the face orientation guide overlap the target guide.

Furthermore, the guidance unit 200 also displays a message "2. Please follow the target guide with your eyes without moving your face." Consequently, once the gaze guide and the face orientation guide overlap the target guide and the target guide starts to move, the target changes their gaze direction to follow the target guide. In the example illustrated in FIG. 21(b), the target guide moves downward, and thus, their gaze direction changes downward while the target's face orientation remains fixed. After the target guide starts to move, the face orientation guide and the gaze guide may be hidden.

### (Technical Effect)

Next, a technical effect obtained by the thirteenth information processing apparatus 10 will be described.

As described in FIG. 21(a) and FIG. 21(b), in the thirteenth information processing apparatus 10, when the gaze guide and the face orientation guide overlap the target, the target guide starts to move. As a result, it is possible to initiate the guidance of the gaze direction after aligning the gaze direction and the face orientation. This enables more appropriate guidance of the gaze direction, as compared with when the guidance is initiated while the gaze direction and the face orientation are not aligned.

A processing method that is executed on a computer by recording, on a recording medium, a program for allowing the configuration in each of the example embodiments to be operated so as to realize the functions in each example embodiment, and by reading, as a code, the program recorded on the recording medium, is also included in the scope of each of the example embodiments. That is, a computer-readable recording medium is also included in the range of each of the example embodiments. Not only the recording medium on which the above-described program is recorded, but also the program itself is also included in each example embodiment.

The recording medium to use may be, for example, a floppy disk (registered trademark), a hard disk, an optical disk, a magneto-optical disk, a CD-ROM, a magnetic tape, a nonvolatile memory card, or a ROM. Furthermore, not only the program that is recorded on the recording medium and that executes processing alone, but also the program that operates on an OS and that executes processing in cooperation with the functions of expansion boards and another software, is also included in the scope of each of the example embodiments. In addition, the program itself may be stored in a server, and a part or all of the program may be downloaded from the server to a user terminal. The program may be provided to a user in a form of SaaS (Software as a Service), for example.

### <Supplementary Notes>

The example embodiments described above may be further described as, but not limited to, the following Supplementary Notes.

### (Supplementary Note 1)

An information processing apparatus according to Supplementary Note 1 is an information processing apparatus including: an image capture unit that captures an eye image containing an iris region of a target; an identification unit that identifies an unimaged region indicating a region of an iris region of the target that cannot be captured by the image capture unit due to an occluding object; and an output unit that outputs the eye image including information about the unimaged region.

### (Supplementary Note 2)

An information processing apparatus according to Supplementary Note 2 is the information processing apparatus according to Supplementary Note 1, further including: a control unit that controls the image capture unit to newly capture the eye image in a case where the unimaged region is greater than or equal to a first threshold.

### (Supplementary Note 3)

An information processing apparatus according to Supplementary Note 3 is the information processing apparatus according to Supplementary Note 2, further including: an extraction unit that extracts an iris region contained in the eye image; and a storage unit that stores the iris region extracted by the imaging region extraction unit, as a previously imaged iris region, wherein the identification unit identifies the unimaged region, based on the eye image and the previously imaged iris region.

### (Supplementary Note 4)

An information processing apparatus according to Supplementary Note 4 is the information processing apparatus according to Supplementary Note 3, wherein the identification unit identifies the unimaged region in a case where a combined region of the iris region extracted by the imaging area extraction unit and the previously imaged iris region stored in the storage unit is less than or equal to a second threshold.

### (Supplementary Note 5)

An information processing apparatus according to Supplementary Note 5 is the information processing apparatus according to Supplementary Note 3 or 4, further including: a registration unit that registers both a newly imaged iris region and the previously imaged iris region, as a registration image used for matching, in a case where the unimaged region, which is identified from the newly imaged iris region and the previously imaged iris region, is less than or equal to a third threshold, wherein the newly imaged iris region is contained in the eye image newly captured under control of the control unit.

### (Supplementary Note 6)

An information processing apparatus according to Supplementary Note 6 is the information processing apparatus according to Supplementary Note 3 or 4, further including: a matching unit that matches both a newly imaged iris region and the previously imaged iris region, which serve as a matching image, to a registration image registered in advance, in a case where the unimaged region, which is identified from the newly imaged iris region and the previously imaged iris region, is less than or equal to a fourth threshold, wherein the newly imaged iris region is contained in the eye image newly captured under control of the control unit.

### (Supplementary Note 7)

An information processing apparatus according to Supplementary Note 7 is the information processing apparatus according to any one of Supplementary Notes 1 to 6, wherein the output unit outputs information to be displayed in an aspect that highlights the unimaged region rather than the iris region of the target.

### (Supplementary Note 8)

An information processing apparatus according to Supplementary Note 8 is the information processing apparatus according to any one of Supplementary Notes 2 to 7, further including: a guidance unit that guides the target based on the unimaged region, such that the iris region contained in the eye image changes.

### (Supplementary Note 9)

An information processing apparatus according to Supplementary Note 9 is the information processing apparatus according to Supplementary Note 8, wherein the guidance unit guides the target based on at least one of an area and a position of the unimaged region.

### (Supplementary Note 10)

An information processing apparatus according to Supplementary Note 10 is the information processing apparatus according to Supplementary Note 8 or 9, wherein the guidance unit repeatedly guides the target until the unimaged region becomes less than or equal to a fifth threshold.

### (Supplementary Note 11)

An information processing apparatus according to Supplementary Note 11 is the information processing apparatus according to any one of Supplementary Notes 8 to 10, wherein the guidance unit performs first guidance that guides the target to change a gaze direction of the target with face orientation of the target fixed, and second guidance that guides the target to change the face orientation with the gaze direction fixed.

### (Supplementary Note 12)

An information processing apparatus according to Supplementary Note 12 is the information processing apparatus according to Supplementary Note 11, wherein in a case where an amount of change in the unimaged region after one of the first guidance and the second guidance is performed, is less than or equal to a sixth threshold, the guidance unit performs another of the first guidance and the second guidance.

### (Supplementary Note 13)

An information processing apparatus according to Supplementary Note 13 is the information processing apparatus according to any one of Supplementary Notes 8 to 12, wherein the guidance unit displays a gaze guide indicating a gaze direction of the target, a face orientation guide indicating face orientation of the target, and a target guide for guiding the target, and starts to move the target guide in response to the gaze guide and the face orientation guide overlapping the target guide.

### (Supplementary Note 14)

An information processing method according to Supplementary Note 14 is an information processing method that is executed by at least one computer, the information processing method including: capturing an eye image containing an iris region of a target; identifying an unimaged region indicating a region of an iris region of the target that cannot be captured due to an occluding object; and outputting the eye image including information about the unimaged region.

### (Supplementary Note 15)

A recording medium according to Supplementary Note 15 is a recording medium on which a computer program that allows at least one computer to execute an information processing method is recorded, the information processing method including: capturing an eye image containing an iris region of a target; identifying an unimaged region indicating a region of an iris region of the target that cannot be captured due to an occluding object; and outputting the eye image including information about the unimaged region.

### (Supplementary Note 16)

A computer program according to Supplementary Note 16 is a computer program that allows at least one computer to execute an information processing method, the information processing method including: capturing an eye image containing an iris region of a target; identifying an unimaged region indicating a region of an iris region of the target that cannot be captured due to an occluding object; and outputting the eye image including information about the unimaged region.

The present disclosure is permitted to be changed, if desired, without departing from the essence or spirit of the present disclosure which can be read from the claims and the entire specification. An information processing apparatus, an information processing method, and a recording medium with such changes are also intended to be within the technical scope of the present disclosure.

### Description of Reference Codes

10 Information processing apparatus
11 Processor
110 Image capture unit
120 Unimaged region identification unit
130 Output unit
140 Image capture control unit
150 Iris region extraction unit
160 Iris region storage unit
170 Registration unit
180 Registration information storage unit
190 Matching unit
200 Guidance unit

## Claims

1. An information processing apparatus comprising:
an image capture unit that captures an eye image containing an iris region of a target;
an identification unit that identifies an unimaged region indicating a region of an iris region of the target that cannot be captured by the image capture unit due to an occluding object; and
an output unit that outputs the eye image including information about the unimaged region.

2. The information processing apparatus according to Claim 1, further comprising:
a control unit that controls the image capture unit to newly capture the eye image in a case where the unimaged region is greater than or equal to a first threshold.

3. The information processing apparatus according to Claim 2, further comprising:
an extraction unit that extracts an iris region contained in the eye image; and
a storage unit that stores the iris region extracted by the imaging region extraction unit, as a previously imaged iris region, wherein
the identification unit identifies the unimaged region, based on the eye image and the previously imaged iris region.

4. The information processing apparatus according to Claim 3, wherein
the identification unit identifies the unimaged region in a case where a combined region of the iris region extracted by the imaging area extraction unit and the previously imaged iris region stored in the storage unit is less than or equal to a second threshold.

5. The information processing apparatus according to Claim 3 or 4, further comprising:
a registration unit that registers both a newly imaged iris region and the previously imaged iris region, as a registration image used for matching, in a case where the unimaged region, which is identified from the newly imaged iris region and the previously imaged iris region, is less than or equal to a third threshold, wherein the newly imaged iris region is contained in the eye image newly captured under control of the control unit.

6. The information processing apparatus according to Claim 3 or 4, further comprising:
a matching unit that matches both a newly imaged iris region and the previously imaged iris region, which serve as a matching image, to a registration image registered in advance, in a case where the unimaged region, which is identified from the newly imaged iris region and the previously imaged iris region, is less than or equal to a fourth threshold, wherein the newly imaged iris region is contained in the eye image newly captured under control of the control unit.

7. The information processing apparatus according to Claim 1 or 2, wherein
the output unit outputs information to be displayed in an aspect that highlights the unimaged region rather than the iris region of the target.

8. The information processing apparatus according to Claim 2 or 3, further comprising:
a guidance unit that guides the target based on the unimaged region, such that the iris region contained in the eye image changes.

9. The information processing apparatus according to Claim 8, wherein
the guidance unit guides the target based on at least one of an area and a position of the unimaged region.

10. The information processing apparatus according to Claim 8, wherein
the guidance unit repeatedly guides the target until the unimaged region becomes less than or equal to a fifth threshold.

11. The information processing apparatus according to Claim 8, wherein
the guidance unit performs first guidance that guides the target to change a gaze direction of the target with face orientation of the target fixed, and second guidance that guides the target to change the face orientation with the gaze direction fixed.

12. The information processing apparatus according to Claim 11, wherein
in a case where an amount of change in the unimaged region after one of the first guidance and the second guidance is performed, is less than or equal to a sixth threshold, the guidance unit performs another of the first guidance and the second guidance.

13. The information processing apparatus according to Claim 8, wherein
the guidance unit
displays a gaze guide indicating a gaze direction of the target, a face orientation guide indicating face orientation of the target, and a target guide for guiding the target, and
starts to move the target guide in response to the gaze guide and the face orientation guide overlapping the target guide.

14. An information processing method that is executed by at least one computer, the information processing method comprising:
capturing an eye image containing an iris region of a target;
identifying an unimaged region indicating a region of an iris region of the target that cannot be captured due to an occluding object; and
outputting the eye image including information about the unimaged region.

15. A recording medium on which a computer program that allows at least one computer to execute an information processing method is recorded, the information processing method including:
capturing an eye image containing an iris region of a target;
identifying an unimaged region indicating a region of an iris region of the target that cannot be captured due to an occluding object; and
outputting the eye image including information about the unimaged region.
